# EUROPÄISCHE PATENTSCHRIFT

(11) **EP 0 569 825 B1**
(45) Veröffentlichungstag und Bekanntmachung des Hinweises auf die Patenterteilung: **14.08.1996**
(21) Anmeldenummer: 93107224.3
(22) Anmeldetag: 04.05.1993
(51) Int. Cl.: H01R 33/94, H01R 33/08

(54) **Adapter für eine einseitig gesockelte Niederdruckentladungslampe**
Adapter for a low pressure discharge lamp with an unilateral socket
Adaptateur pour une lampe à décharge à basse pression au culot unilatéral

(30) Priorität: 11.05.1992 DE 9206294 U
(43) Veröffentlichungstag der Anmeldung: 18.11.1993
(73) Patentinhaber: Patent-Treuhand-Gesellschaft für elektrische Glühlampen mbH, D-81543 München (DE)
(72) Erfinder: Schadhauser, Klaus, W-8000 München 81 (DE)

(56) Entgegenhaltungen:
- EP-A- 0 179 473
- EP-A- 0 447 957
- WO-A-85/04769

## Beschreibung

Die Erfindung betrifft einen Adapter für eine einseitig gesockelte Niederdruckentladungslampe gemäß des Oberbegriffs des Patentanspruchs 1.

Ein Adapter ist beispielsweise in der EP-PS 179 473 offenbart. Dieser Adapter besteht aus einem zweiteiligem Gehäuse, dessen Unterteil einen für Glühlampen gebräuchlichen Sockel aufweist und dessen Oberteil eine Aufnahmevorrichtung für den Führungszapfen sowie Durchführungen für die Kontaktstifte der Niederdruckentladungslampe besitzt. Im Inneren des Gehäuses befindet sich eine Montageplatine, auf der die Bauelemente des Vorschaltgerätes fixiert und in der die Gegenkontakte zu den Kontaktstiften der Niederdruckentladungslampe verankert sind. Die Gegenkontakte besitzen federnde Kontaktfahnen, die die Kontaktstifte zweiseitig umschließen.

Es hat sich gezeigt, daß beim Einsetzen einer Niederdruckentladungslampe in den Adapter über die Kontaktstifte und die Gegenkontakte ein relativ starker Druck auf die Montageplatine ausgeübt wird, der zu Beschädigungen der Leiterbahnen auf der Platine und zum Ausfall des Vorschaltgerätes führen kann.

Die internationale Patentanmeldung WO 85/04769 beschreibt einen unter den Oberbegriff des Patentanspruchs 1 fallenden Adapter. Der Adapter besitzt ein Gehäuse, deren Unterseite einen für Glühlampen gebräuchlichen Schraubsockel aufweist, während die Oberseite mit einer Aufnahme für den Führungszapfen und die Kontaktstifte einer Niederdruckentladungslampe ausgestattet ist. Im Inneren des Gehäuses ist eine Montageplatine mit den darauf montierten Bauelementen des Vorschaltgerätes angeordnet. Die im wesentlichen U-förmig ausgebildeten Gegenkontakte zu den Kontaktstiften der Niederdruckentladungslampe sind in der Montageplatine verankert und zusätzlich in einer separaten Ausnehmung des Adaptergehäuses angeordnet. Die Gegenkontakte sind ferner mittels eines U-Schenkels, der als Widerhaken ausgebildet ist, an der Gehäusewandung arretiert. Außerdem werden die Gegenkontakte jeweils mit Hilfe eines Isolationseinsatzes gegen die Komponenten des Vorschaltgerätes elektrisch isoliert. Der in diesem Dokument beschriebene Adapter besitzt eine relativ aufwendig ausgeführte Verankerung und elektrische Isolation der Gegenkontakte.

Es ist die Aufgabe der Erfindung, einen Adapter für eine einseitig gesockelte Niederdruckentladungslampe bereitzustellen, der eine verbesserte Verankerung der Gegenkontakte aufweist, so daß beim Einsetzen der Lampe in den Adapter keine nennenswerten Kräfte auf die Montageplatine übertragen werden.

Diese Aufgabe wird erfindungsgemäß durch die kennzeichnenden Merkmale des Schutzanspruchs 1 gelöst. Vorteilhafte Ausführungsformen der Erfindung sind in den Unteransprüchen beschrieben.

Der erfindungsgemäße Adapter ist mit Gegenkontakten ausgestattet, die nicht nur in der Montageplatine verankert sind, sondern zusätzlich auch mittels einer Öse an einem nasenartigen Vorsprung in der Gehäusewandung fixiert sind. Dadurch werden die beim Einsetzen der Lampe in den erfindungsgemäßen Adapter wirksamen Kräfte von der Gehäusewandung aufgenommen und nicht auf die Montageplatine übertragen.

Die Erfindung wird nachstehend anhand eines bevorzugten Ausführungsbeispiels und zweier Abbildungen näher erläutert. Es zeigen:
- Figur 1: eine Seitenansicht (Querschnitt) des erfindungsgemäßen Adapters
- Figur 2: eine zweite Seitenansicht (Querschnitt) des erfindungsgemäßen Adapters, gegenüber der Figur 1 bezüglich der axialen Richtung um 90° gedreht
- Figur 3: eine Draufsicht auf den erfindungsgemäßen Adapter, ohne Lampe.

Der erfindungsgemäße Adapter besitzt entsprechend des besonders bevorzugten Ausführungsbeispiels ein zweiteiliges Gehäuse 1, das aus einem Oberteil 1a und einem Unterteil 1b besteht, die mittels einer Schnappverbindung unlösbar miteinander verbunden sind. Das Gehäuseunterteil 1b ist mit einem für Glühlampen gebräuchlichen E 27-Schraubsockel 2 versehen. Innerhalb des Gehäuses 1, am Unterteil 1b befestigt, befindet sich eine Montageplatine 3, die vorzugsweise die Bauelemente 4 eines elektronischen Vorschaltgerätes trägt.
Anstelle eines elektronischen Vorschaltgerätes kann aber auch genauso gut ein konventionelles Vorschaltgerät, d.h., ein induktives Vorschaltgerät mit Starter, eingebaut werden.

Das Gehäuseoberteil 1a des Adapters ist mit einer mittig angeordneten Aufnahmevorrichtung 5 für den Führungszapfen 6 einer einseitig gesockelten Niederdruckentladungslampe 7 ausgestattet. Die Aufnahmevorrichtung 5 greift durch eine Aussparung in der Montageplatine 3 hindurch. Außerdem besitzt das Gehäuseoberteil 1a Durchführungen 8 für die Kontaktstifte 9 der Lampe 7, die aus ihrem Sockel 10 herausragen.

Die Kontaktstifte 9 der Lampe 7 werden jeweils von einem Gegenkontakt 11 aufgenommen, der innerhalb des Adaptergehäuses 1 angeordnet ist.

Die Gegenkontakte 11 bestehen aus vernickelter Kupferbronze und sind jeweils einteilig ausgeführt. Sie besitzen eine Kontaktfeder 11a, die den aufzunehmenden Kontaktstift 9 von zwei Seiten umschließt, und eine Befestigungsfahne 11b, die auf der Montageplatine 3 verlötet ist. Die Befestigungsfahnen 11b sind jeweils mit einer Öse 12 versehen, durch die ein nasenartiger Vorsprung 13 greift, der im Bereich der Aufnahmevorrichtung 5 in der Wandung des Gehäusesoberteils 1a angebracht ist.

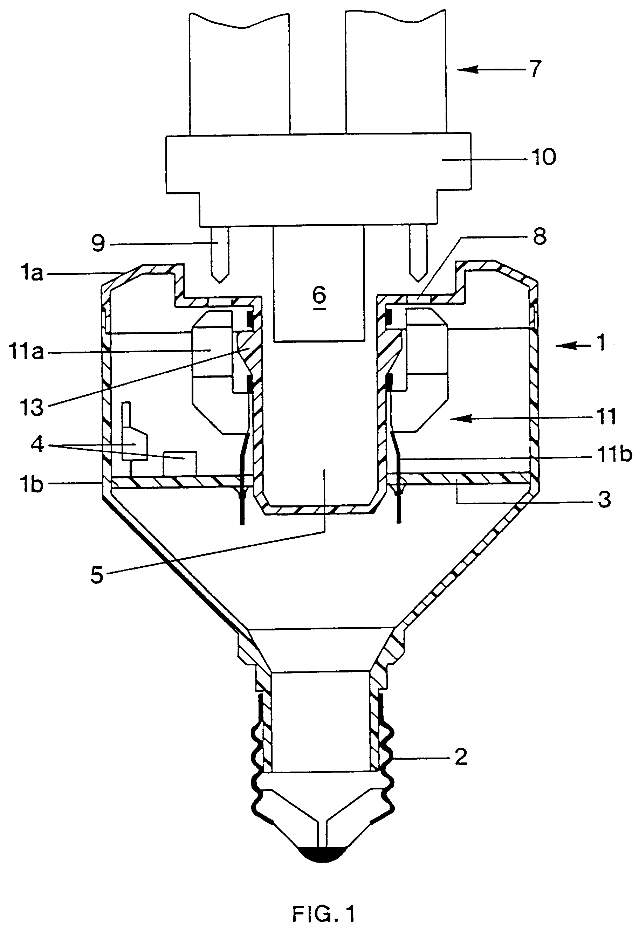

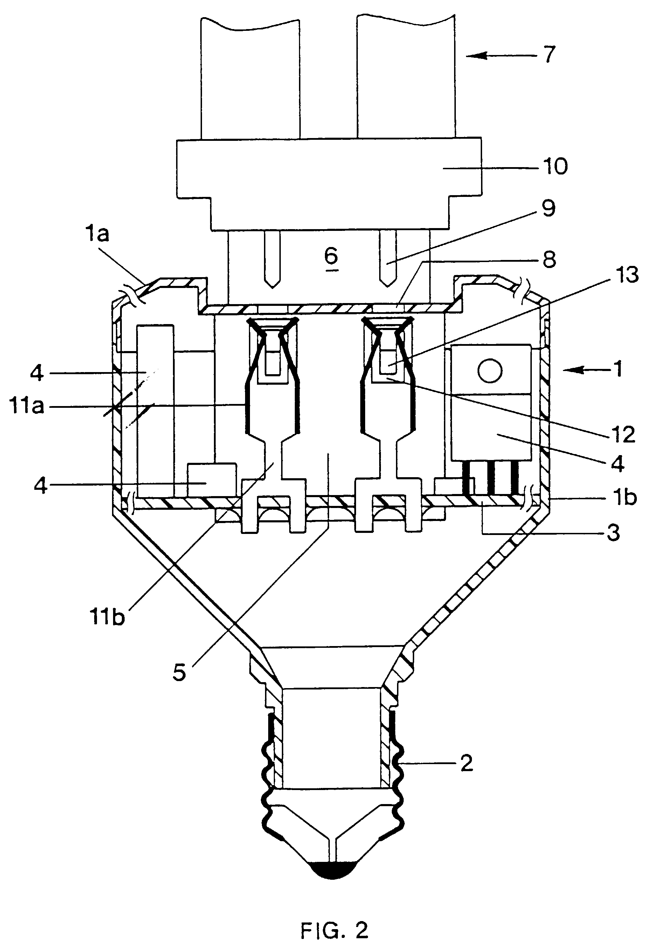

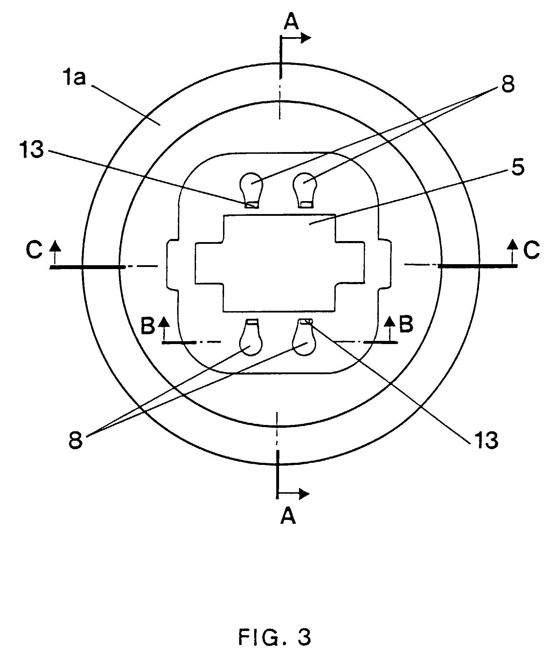

Die Figuren 1 und 2 zeigen die Fixierung der Gegenkontakte 11 mit ihren Kontaktfedern 11a und den Befestigungsfahnen 11b auf der Montageplatine 3 und an dem Vorsprung 13 des Adaptergehäuses. Das Gehäuseoberteil 1a und die Montageplatine 3 sind in Figur 2 entlang der Linie B-B (Figur 3) geschnitten dargestellt, während das Unterteil 1b und der Sockel 2 entlang der Linie C-C (Figur 3) aufgeschnitten sind.

Die Erfindung beschränkt sich nicht auf das angegebene Ausführungsbeispiel. So können die Gegenkontakte auch auf andere Weise an der Gehäusewandung befestigt werden. Beispielsweise ist es möglich, die Gegenkontakte anstelle einer Öse mit einem Widerhaken auszustatten, der in einen paßgerechten Schlitz oder in eine Vertiefung in der Gehäusewandung einhakt.

## Patentansprüche

1. Adapter für eine einseitig gesockelte Niederdruckentladungslampe, deren Sockel (10) einen Führungszapfen (6) und mindestens zwei Kontaktstifte (9) aufweist, wobei
- der Adapter ein evtl. mehrteiliges Gehäuse (1) besitzt,
- das Gehäuse (1) mit einer Aufnahmevorrichtung (5) für den Führungszapfen (6) und mit Durchführungen (8) für die Kontaktstifte (9) versehen ist,
- das Gehäuse (1) mit einem für Glühlampen gebräuchlichen Sockel (2) ausgestattet ist,
- im Inneren des Gehäuses (1) eine Montageplatine (3) angeordnet ist,
- Gegenkontakte (11) auf der Montageplatine (3) befestigt sind, die die Kontaktstifte (9) aufnehmen,
- die Gegenkontakte (11) zusätzlich an einer Wandung des Gehäuses (1) befestigt sind,
dadurch gekennzeichnet, daß die Gegenkontakte (11) jeweils mit einer Öse (12) ausgestattet sind, durch die ein nasenartiger Vorsprung (13) in der Wandung des Gehäuses (1) hindurchgreift.

2. Adapter nach Anspruch 1, dadurch gekennzeichnet, daß die Gegenkontakte (11) jeweils eine Befestigungsfahne (11b) und eine Kontaktfeder (11a) aufweisen, wobei die Befestigungsfahne (11b) in der Montageplatine (3) und mittels der Öse (12) an der Wandung des Gehäuse (1) verankert sind, und wobei die Kontaktfeder (11a) den aufzunehmenden Kontaktstift (9) zweiseitig umschließt.

## Claims

1. Adapter for a low-pressure discharge lamp with a single pinch, the base (10) of which lamp has a guide pin (6) and at least two contact pins (9),
- the adapter having a possibly multi-component housing (1),
- the housing (1) being provided with a receiving device (5) for the guide pin (6) and with bushings (8) for the contact pins (9),
- the housing (1) being equipped with a base (2) which is customary for filament lamps,
- a mounting plate (3) being arranged inside the housing (1),
- counter-contacts (11) being attached on the mounting plate (3) and receiving the contact pins (9),
- the counter-contacts (11) being additionally attached to a wall of the housing (1),
characterised in that the counter-contacts (11) are each equipped with an eye (12) through which a nose-like projection (13) in the wall of the housing (1) engages.

2. Adapter according to Claim 1, characterised in that the counter-contacts (11) each have an attachment vane (11b) and a contact spring (11a), the attachment vane (11b) being anchored in the mounting plate (3) and being anchored to the wall of the housing (1) by means of the eye (12) and the contact spring (11a) surrounding on two sides the contact pin (9) to be received.

## Revendications

1. Adaptateur pour une lampe à décharge basse pression à embase d'un seul côté, dont l'embase (10) comporte un tenon (6) de guidage et au moins deux broches (9) de contact,
- l'adaptateur comprenant un boîtier (1) éventuellement en plusieurs parties,
- le boîtier (1) étant muni d'un dispositif (5) de réception du tenon (6) de guidage et de passages (8) pour les broches (9) de contact,
- le boîtier (1) étant muni d'un culot (2) usuel pour des lampes à incandescence,
- une platine (3) de montage est disposée à l'intérieur du boîtier (1),
- les contacts (11) antagonistes, qui reçoivent les broches (9) de contact, sont fixés sur la platine (3) de montage,
- les contacts (11) antagonistes sont fixés en plus à une paroi du boîtier (1),
caractérisé en ce que les contacts antagonistes (11) sont munis chacun d'un oeillet (12), dans lequel pénètre une saillie (13) en forme de bec de la paroi du boîtier (1).

2. Adaptateur suivant la revendication 1, caractérisé en ce que les contacts (11) antagonistes comportent chacun une bretelle (11b) de fixation et un ressort (11a) de contact, la bretelle (11b) de fixation étant ancrée à la platine (3) de montage et au moyen de l'oeillet (12) à la paroi du boîtier (1), le ressort (11a) de contact entourant de deux côtés la broche (9) de contact à recevoir.
